# EUROPÄISCHE PATENTSCHRIFT

(11) **EP 2 493 957 B1**
(45) Veröffentlichungstag und Bekanntmachung des Hinweises auf die Patenterteilung: **11.09.2013**
(21) Anmeldenummer: 10771480.0
(22) Anmeldetag: 02.11.2010
(51) Int. Cl.: C08G 18/84, C08G 18/10, C09J 175/08, C08G 65/336, C08G 18/48, C09J 171/02, C08L 71/02

(54) **HARNSTOFFGEBUNDENDE ALKOXYSILANE ZUM EINSATZ IN DICHT- UND KLEBSTOFFEN**
UREA-BONDED ALKOXYSILANES FOR USE IN SEALANTS AND ADHESIVES
ALCOXYSILANES À LIAISON URÉE DESTINÉS À ÊTRE UTILISÉS DANS DES AGENTS D'ÉTANCHÉITÉ ET DES ADHÉSIFS

(30) Priorität: 30.10.2009 DE 102009046269
(43) Veröffentlichungstag der Anmeldung: 05.09.2012
(73) Patentinhaber: Henkel AG & Co. KGaA, 40589 Düsseldorf (DE)
(72) Erfinder: ZANDER, Lars, 41569 Rommerskirchen (DE); KUNZE, Christiane, 51061 Köln (DE); KLEIN, Johann, 40593 Düsseldorf (DE)
(86) Internationale Anmeldenummer: PCT/EP2010/066592
(87) Internationale Veröffentlichungsnummer: WO 2011/051491

(56) Entgegenhaltungen:
- EP-A1- 1 621 568
- WO-A2-2006/088839
- US-B1- 7 294 665

## Beschreibung

Die vorliegende Erfindung betrifft mit Feuchtigkeit vernetzende, härtbare Prepolymer-Zusammensetzungen auf Basis Harnstoff-gebundener Alkoxysilane, deren Herstellung und Verwendung in Kleb- und Dichtstoffen und Beschichtungsmitteln.

Polymersysteme, die über reaktive Alkoxysilylgruppen verfügen, sind bekannt. In Gegenwart von Luftfeuchtigkeit sind diese alkoxysilanterminierten Polymere bereits bei Raumtemperatur in der Lage, unter Abspaltung der Alkoxygruppen miteinander zu kondensieren. Je nach Gehalt an Alkoxysilylgruppen und deren Aufbau bilden sich dabei hauptsächlich langkettige Polymere (Thermoplaste), relativ weitmaschige dreidimensionale Netzwerke (Elastomere) oder hochvernetzte Systeme (Duroplaste).

Die Polymere weisen in der Regel ein organisches Grundgerüst auf, das an den Enden Alkoxysilylgruppen trägt. Bei dem organischen Grundgerüst kann es sich beispielsweise um Polyurethane, Polyester, Polyether etc. handeln.

Einkomponentige, feuchtigkeitshärtende Kleb- und Dichtstoffe spielen seit Jahren eine bedeutende Rolle bei zahlreichen technischen Anwendungen. Neben den Polyurethan-Kleb- und Dichtstoffen mit freien Isocyanatgruppen und den traditionellen Silikon- Kleb- und Dichtstoffen auf der Basis von Dimethylpolysiloxanen sind in letzter Zeit auch verstärkt die so genannten modifizierten Silan-Kleb- und Dichtstoffe eingesetzt worden. Bei der letztgenannten Gruppe ist der Hauptbestandteil des Polymerrückgrats ein Polyether und die reaktiven und vernetzungsfähigen Endgruppen sind Alkoxysilylgruppen. Gegenüber den Polyurethan-Kleb- und Dichtstoffen weisen die modifizierten Silan-Kleb- und Dichtstoffe den Vorteil der Freiheit von Isocyanatgruppen, insbesondere von monomeren Diisocyanaten auf, weiterhin zeichnen sie sich durch ein breites Haftspektrum auf einer Vielzahl von Substraten ohne Oberflächenvorbehandlung durch Primer aus.

US 4,222,925 A und US 3,979,344 A beschreiben bereits bei Raumtemperatur härtbare siloxanterminierte organische Dichtstoffzusammensetzungen auf der Basis von Umsetzungsprodukten von Isocyanat-terminierten Polyurethan-Prepolymeren mit 3-Aminopropyltrimethoxysilan beziehungsweise 2-Aminoethyl-, 3-Aminopropylmethoxysilan zu isocyanatfreien siloxanterminierten Prepolymeren. Kleb- und Dichtstoffe auf der Basis dieser Prepolymeren weisen jedoch unbefriedigende mechanische Eigenschaften, insbesondere in Bezug auf ihre Dehnung und Reißfestigkeit auf.

Für die Herstellung von silanterminierten Prepolymeren auf der Basis von Polyethern sind die nachfolgend aufgeführten Verfahren bereits beschrieben worden:
- Copolymerisation von ungesättigten Monomeren mit solchen die Alkoxysilylgruppen aufweisen, wie z.B. Vinyltrimethoxysilan.
- Aufpfropfung von ungesättigten Monomeren wie Vinyltrimethoxysilan auf Thermoplaste wie Polyethylen.
- Hydroxyfunktionelle Polyether werden mit ungesättigten Chlorverbindungen, z.B. Allylchlorid, in einer Ethersynthese in Polyether mit endständigen olefinischen Doppelbindungen umgesetzt, die ihrerseits mit Hydrosilanverbindungen, die hydrolysierbare Gruppen haben, wie z.B. HSi(OCH₃)₃ in einer Hydrosilylierungsreaktion unter dem katalytischen Einfluss von beispielsweise Übergangsmetallverbindungen der 8. Gruppe zu silanterminierten Polyethern umgesetzt werden.
- In einem anderen Verfahren werden die olefinisch ungesättigte Gruppen enthaltenden Polyether mit einem Mercaptosilan wie z.B. 3-Mercaptopropyltrialkoxysilan umgesetzt.
- Bei einem weiteren Verfahren werden zunächst Hydroxylgruppen-haltige Polyether mit Di- oder Polyisocyanaten umgesetzt, die dann ihrerseits mit aminofunktionellen Silanen oder mercaptofunktionellen Silanen zu silanterminierten Prepolymeren umgesetzt werden.
- Eine weitere Möglichkeit sieht die Umsetzung von hydroxyfunktionellen Polyethern mit isocyanatofunktionellen Silanen wie z.B. 3-Isocyanatopropyltrimethoxysilan vor.

Diese Herstellverfahren und die Verwendung der oben genannten silanterminierten Prepolymeren in Kleb-/Dichtstoffanwendungen sind beispielsweise in den folgenden Patentschriften genannt: US-A-3971751, EP-A-70475, DE-A-19849817, US-A-6124387, US-A-5990257, US-A-4960844, US-A-3979344, US-A-3971751, US-A-3632557, DE-A-4029504, EP-A-601021 oder EP-A-370464.

DE 2754545 A beschreibt ein Verfahren zur Herstellung einer Dichtungsmasse die ein verbessertes Haftvermögen aufweisen soll. Gemäß diesem Verfahren soll man ein Polyol mit einer Hydroxylfunktionalität von mehr als 2 und einem mittleren Molekulargewicht in dem Bereich von etwa 1000 bis 15000 mit einem Polyisocyanat in stöchiometrischem Überschuss umsetzen, so dass ein Polyurethanprepolymer mit endständigen NCO- Gruppen erhalten wird. Anschließend sollen wenigstens 1% der endständigen NCO- Gruppen mit einem aminofunktionellen Alkoxysilan umgesetzt werden, wobei die Aminogruppe des Silans eine sekundäre Aminogruppe ist. An die Stelle des Aminosilans soll auch das Reaktionsprodukt eines Mercaptosilans mit einem Monoepoxid oder ein Reaktionsprodukt eines Epoxysilans mit einem sekundären Amin treten können. Weiterhin sollen dem so gebildeten silanmodifizierten Polyurethanpolymer Füllstoffe und Pigmente zusetzt werden.

Aus der EP0096249 A1 sind lösungsmittelfreie bzw. lösungsmittelarme Haftkleber auf der Basis von Harzmischungen bekannt, die bei Temperaturen bis zu 100°C flüssig sind und die entweder bei erhöhter Temperatur oder unter dem Einfluss von Feuchtigkeit vernetzen. Die Temperaturvernetzung soll bei Temperaturen ab 100°C erfolgen, vorzugsweise bei etwa 120°C. Gemäß der Lehre dieser Schrift enthalten die Klebstoffzusammensetzungen ein oder mehrere, miteinander verträgliche, hydroxylgruppenhaltige Polymere mit einem Molekulargewicht von 500 bis 30.000, deren Hydroxylgruppen zu mindestens 5% und nicht mehr als 90% durch Alkoxysilylgruppen ersetzt sind. Die Einführung der Alkoxysilylgruppen soll durch Reaktion eines Diisocyanats mit einer Hydroxylgruppe am Polymeren einerseits und mit einem Amino- oder Mercaptosilanester andererseits erfolgen. Aufgrund ihrer flüssigen bis zähflüssigen Konsistenz bei Raumtemperatur oder mäßig erhöhter Temperatur sollen sich die Harze ohne Anwendung eines Lösungsmittels in dünner Schicht auf Substrate für selbstklebende Produkte aufbringen lassen und können dort zu Haftklebern leicht ausgehärtet werden.

In WO2002/102812 A1 werden silanhaltige ungesättigte organische Verbindungen beschrieben, deren Silangruppen über Harnstoffgruppierungen an das Polymer-Rückgrat gebunden sind. Emulsionen dieser Polymeren sollen sich als Bestandteile von Klebstoffen, Dichtstoffen oder Beschichtungsmaterialien eignen.

WO2005/047394 A1 offenbart vernetzbare Zusammensetzungen, die unter Verwendung eines Gemisches aus zwei oder mehreren Polyolen herstellbar sind, hierzu sollen mindestens zwei unterschiedliche Polyoxyalkylene eingesetzt werden, wobei mindestens eine erste Oxyalkyleneinheit mindestens zwei C-Atome zwischen zwei benachbarten Sauerstoffatomen aufweist und mindestens eine zweite Oxyalkyleneinheit mindestens ein C-Atom mehr zwischen zwei benachbarten Sauerstoffatomen aufweist als die erste Oxyalkyleneinheit. Beispielsweise wird die Umsetzung eines Gemisches aus Polypropylenglycol und Poly-THF mit Toluylendiisocyanat und nachfolgender Umsetzung mit Isocyanatopropyltrimethoxysilan zu einem feuchtigkeitshärtenden Polymer beschrieben.

Aus WO2006/088839 A1 sind vernetzbare Silan-terminierte Polymere bekannt, die das Reaktionsprodukt eines Isocyanat-terminierten Prepolymers mit einem Silan umfasst, das mehrere hydrolysierbare Gruppen und mindestens eine isocyanatreaktive Gruppe mit aktivem Wasserstoff aufweist. Dabei soll das Silan bei der Hydrolyse einen reduzierten Anteil an flüchtigen organischen Verbindungen freisetzen im Vergleich zu Silanen mit einer equivalenten Anzahl an hydrolysierbaren Gruppen, die alle Alkoxygruppen sind.

In WO2007/037915 A2 wird die Herstellung von Aminosilan-terminierten Polymeren durch Silylierung von Isocyanat-terminierten Polyurethan-Prepolymeren unter Verwendung von Zink- oder Wismut-Katalysatoren beschrieben. Diese Prepolymeren sollen erhöhte Stabilität gegenüber atmosphärischer Feuchtigkeit aufweisen. Diese Polymeren sollen gute Eignung für die Verwendung als Dichtstoffe, Klebstoffe oder zur Herstellung von Schutz-Beschichtungen haben.

DE 10 2008 020 980 A1 beschreibt ein silyliertes Polyurethan, das hergestellt wird durch Umsetzen mindestens einer Polyetherverbindung mit einer OH Zahl nach DIN 53783 zwischen 3 und 20 mg KOH/g bestehend aus mindestens zwei Polyoxyalkylenblöcken A und B, wobei sich die Anzahl der Kohlenstoffatome in den Alkyleneinheiten der Blöcke A und B um mindestens 1 unterscheidet, mit einem oder mehreren Isocyanatosilanen der Formel: OCN-R-Si-(R¹)ₘ(-OR²)₃₋ₘ worin m 0, 1 oder 2 ist, jedes R² ein Alkylrest mit 1 bis 4 Kohlenstoffatomen ist, jedes R¹ ein Alkylrest mit 1 bis 4 Kohlenstoffatomen ist und R eine difunktionelle organische Gruppe ist, um die Hydroxylgruppen des Prepolymers mit dem Isocyanatosilan zu verkappen, wodurch ein silyliertes Polyurethan gebildet wird, das Alkoxysilylgruppen als reaktive Endgruppen aufweist. Die beschriebenen silylierten Polyurethane eignen sich zur Herstellung von Klebstoff-, Dichtstoff- oder Beschichtungsmittel-Zubereitungen mit guten mechanischen Eigenschaften.

Trotz des umfangreichen Standes der Technik besteht weiterhin Bedarf an verbesserten Alkoxysilan-Zusammensetzungen, die sich für den Einsatz als Klebstoffe, Dichtstoffe oder Beschichtungen eignen. Insbesondere sollen die eingesetzten Rohstoffe leicht und kostengünstig zugänglich sein. Eine bessere Verträglichkeit der einzelnen Polymerkomponenten ist für eine problemlose Applikation wünschenswert. Außerdem sollen die Klebstoffe oder Dichtstoffe ein breites Adhäsionsspektrum zu einer Vielzahl von Substraten haben und ein möglichst hohes Festigkeitsniveau nach der Aushärtung aufweisen.

Die erfindungsgemäße Lösung der Aufgabe ist den Patentansprüchen zu entnehmen.

Sie besteht im Wesentlichen in der Bereitstellung reaktiver, harnstoffgebundener Alkoxysilane, die durch Umsetzung eines OH-terminierten Polyether- Blockcopolymers der Struktur B-Aₙ, in dem n gleich 2 bis 10, insbesondere 2 bis 6, bevorzugt 2 oder 3 ist, und in dem der zentrale Block B aus Polyoxytetramethylen-, Polyoxyethylen-, Polybutadien-, Polyisopren, Polyacrylat-, Polymethacrylat-, Polyamid-, Polyurethan- oder Polyestereinheiten und die Blöcke A aus

Polyoxypropyleneinheiten bestehen, mit einem stöchiometrischen Überschuss Diisocyanat zu einem NCO-terminierten Prepolymer Q; und anschließende Umsetzung des Prepolymers Q mit einer Silanverbindung der Formel (1), 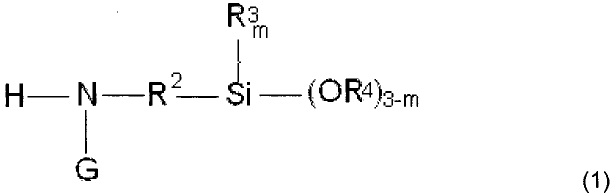 worin G eine organische Gruppe oder Wasserstoff ist, R² eine zweiwertige Alkylengruppe mit 1 bis 10 Kohlenstoffatomen oder eine -(CH₂)ₒ-NR¹-(CH₂)ₚ- Gruppe ist, worin o und p gleich oder verschieden sind und gleich 2 bis 6, bevorzugt 2 und/oder 3 sind und R¹ eine organische Gruppe mit maximal 10 Kohlenstoffatomen ist, R³ ein linearer oder verzweigter Alkylrest mit 1 bis 6 Kohlenstoffatomen ist, R⁴ ein linearer oder verzweigter Alkylrest mit 1 bis 4 Kohlenstoffatomen ist und m gleich 0, 1 oder 2 ist;
erhältlich sind.

Nach einer bevorzugten Ausführungsform ist R² eine zweiwertige Alkylengruppe mit 1 bis 4 Kohlenstoffatomen, insbesondere 1 oder 3 Kohlenstoffatomen. Bevorzugt ist m gleich 0 oder 1.

Vorzugsweise sind R³ und R⁴ unabhängig voneinander Methyl-, Ethyl-, Propyl- oder Butylreste, insbesondere Methyl- oder Ethylreste. Besonders bevorzugt sind Methylreste.

Unter einem stöchiometrischen Überschuss an Diisocyanat wird dabei ein Verhältnis von Isocyanat-Gruppen des Diisocyanats zu OH-Gruppen des Polyether-Blockcopolymers verstanden, das größer als 1 ist, bevorzugt gleich oder größer als 1,05 : 1, insbesondere gleich oder größer als 1,1 : 1 und besonders bevorzugt gleich oder größer als 1,2 : 1.

Im Wesentlichen entstehen dementsprechend harnstoffgebundene Alkoxysilane der allgemeinen Formel (6) 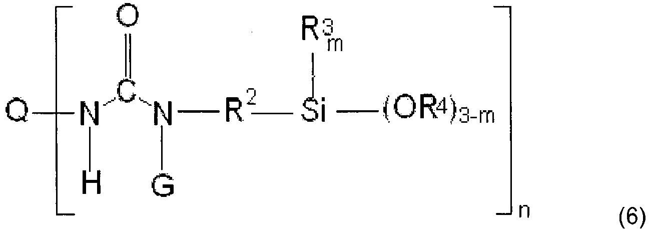 in der m gleich 0, 1 oder 2 ist, n gleich 2 bis 10, insbesondere 2 bis 6, bevorzugt 2 oder 3 ist,
Q ein n-wertiger Rest eines NCO-terminierten Prepolymers ohne die bereits abreagierten terminalen Isocyanatgruppen ist, wobei das Prepolymer durch Umsetzung eines OH-terminierten Polyether- Blockcopolymers der Struktur B-Aₙ, in dem n die vorstehend aufgeführte Bedeutung hat und in dem der zentrale Block B aus Polyoxytetramethylen-, Polyoxyethylen-, Polybutadien-, Polyisopren, Polyacrylat-, Polymethacrylat-, Polyamid-, Polyurethan- oder Polyestereinheiten und die Blöcke A aus Polyoxypropyleneinheiten bestehen, mit Diisocyanat erhältlich ist,
G eine organische Gruppe oder Wasserstoff ist,
-R² eine zweiwertige Alkylengruppe mit 1 bis 10 Kohlenstoffatomen oder eine -(CH₂)ₒ-NR¹-(CH₂)ₚ- Gruppe ist, worin o und p gleich oder verschieden sind und gleich 2 bis 6, bevorzugt 2 und/oder 3 sind und
-R¹ eine organische Gruppe mit maximal 10 Kohlenstoffatomen ist,
-R³ ein linearer oder verzweigter Alkylrest mit 1 bis 6 Kohlenstoffatomen ist und
-R⁴ ein linearer oder verzweigter Alkylrest mit 1 bis 4 Kohlenstoffatomen ist.

Unter einem erfindungsgemäßen harnstoffgebundenen Alkoxysilan ist ein Alkoxysilanterminiertes Prepolymer zu verstehen, dessen Alkoxysilanfunktionalisierte Endgruppen über eine Harnstoff- bzw. Carbamid-Bindegruppe an das Polymerbackbone angebunden sind.

Ein weiterer Gegenstand der Erfindung ist ein Verfahren zur Herstellung eines harnstoffgebundenen Alkoxysilans bzw. einer harnstoffgebundene Alkoxysilane enthaltenden Zusammensetzung umfassend das Umsetzen mindestens einer OH-terminierten Polyetherverbindung mit der Struktur B-Aₙ, in der n gleich 2 bis 10, insbesondere 2 bis 6, bevorzugt 2 oder 3 ist und der zentrale Block B aus Polyoxytetramethylen-, Polyoxyethylen-, Polybutadien-, Polyisopren, Polyacrylat-, Polymethacrylat-, Polyamid-, Polyurethan- oder Polyestereinheiten und die Blöcke A aus Polyoxypropyleneinheiten bestehen, mit einem stöchiometrischen Überschuss eines Diisocyanats zu einem NCO-terminierten Prepolymer, gefolgt von der Umsetzung dieses Prepolymers mit reaktiven Isocyanatgruppen mit einer Silanverbindung der Formel (1), 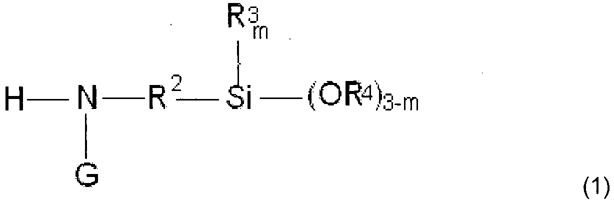 worin G eine organische Gruppe oder Wasserstoff ist, R² eine zweiwertige Alkylengruppe mit 1 bis 10 Kohlenstoffatomen oder eine -(CH₂)ₒ-NR¹-(CH₂)ₚ- Gruppe ist, worin o und p gleich oder verschieden sind und gleich 2 bis 6, bevorzugt 2 und/oder 3 sind und R¹ eine organische Gruppe mit maximal 10 Kohlenstoffatomen ist, R³ ein linearer oder verzweigter Alkylrest mit 1 bis 6 Kohlenstoffatomen ist, R⁴ ein linearer oder verzweigter Alkylrest mit 1 bis 4 Kohlenstoffatomen ist und m gleich 0, 1 oder 2 ist.

Die OH-terminierte Polyetherverbindung mit der Struktur B-Aₙ, weist vorzugsweise eine OH-Zahl nach DIN 53783 zwischen 3 und 56 mg KOH/g auf.

Nach einer bevorzugten Ausführungsform ist R² eine zweiwertige Alkylengruppe mit 1 bis 4 Kohlenstoffatomen, insbesondere 1 oder 3 Kohlenstoffatomen. Bevorzugt ist m gleich 0 oder 1.

Vorzugsweise sind R³ und R⁴ unabhängig voneinander Methyl-, Ethyl-, Propyl- oder Butylreste, insbesondere Methyl- oder Ethylreste. Besonders bevorzugt sind Methylreste.

Gegebenenfalls kann bei dem vorgenannten Herstellverfahren nach der Umsetzung der OH-terminierten bzw. OH-funktionellen Polyetherverbindung mit dem Diisocyanat das nicht umgesetzte monomere Diisocyanat aus dem Reaktionsgemisch entfernt werden, bevor das NCO-terminierte Prepolymer mit der Silanverbindung der Formel (1) weiter umgesetzt wird.

Ein weiterer Gegenstand der Erfindung sind Zubereitungen enthaltend mindestens ein vorgenanntes harnstoffgebundenes Alkoxysilan zur Verwendung als einkomponentiger feuchtigkeitshärtender Kleb- und /oder Dichtstoff, oder zur Verwendung als Beschichtungsmittel.

Zusätzlich zu den erfindungsgemäßen harnstoffgebundenen Alkoxysilan-prepolymeren können die vorgenannten Zubereitungen (Kleb- und Dichtstoffzubereitungen oder Beschichtungsmittel) noch Hilfs- und Zusatzstoffe, wie Weichmacher, Füllstoffe, Katalysatoren und weitere Hilfs- und Zusatzstoffe enthalten.

Wenn die Gruppe G in den Formeln (1) und (6) kein Wasserstoff ist, ist sie bevorzugt durch eine der Formeln (2) bis (5) darstellbar:

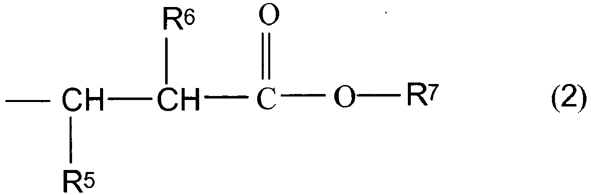

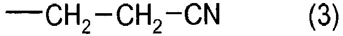

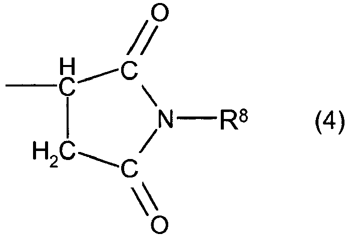

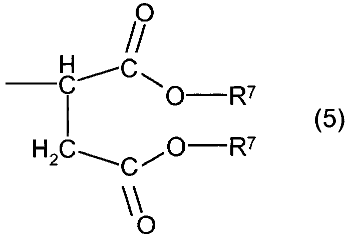

Dabei können R⁵ und R⁶ unabhängig voneinander ein Wasserstoffatom oder eine Methylgruppe, R⁷ ein linearer oder verzweigter Alkylrest mit 1 bis 6 Kohlenstoffatomen und R⁸ ein linearer oder verzweigter Alkylrest mit 1 bis 8 Kohlenstoffatomen sein.

Für die Formel (2) ergeben sich folgende besonders bevorzugte Kombinationen:

| R⁵ | R⁶ | R⁷ |
|---|---|---|
| H | H | Methylgruppe |
| H | H | Ethylgruppe |
| H | H | Propylgruppe |
| H | H | n-Butylgruppe |
| H | H | Isobutylgruppe |
| H | H | Tertiär-Butylgruppe |
| H | H | Pentylgruppe |
| H | H | Hexylgruppe |
| H | Methylgruppe | Methylgruppe |
| H | Methylgruppe | Ethylgruppe |
| H | Methylgruppe | Propylgruppe |
| H | Methylgruppe | n-Butylgruppe |
| H | Methylgruppe | Isobutylgruppe |
| H | Methylgruppe | Tertiär-Butylgruppe |
| H | Methylgruppe | Pentylgruppe |
| H | Methylgruppe | Hexylgruppe |

Die vorstehend aufgeführten Kombinationen sind jedoch auch für R⁵ gleich Methylgruppe und R⁶ gleich Wasserstoffatom mit R⁷ gleich Methyl-, Ethyl-, Propyl-, n-Butyl-, Isobutyl-, tertiär Butyl-, Pentyl- oder Hexylgruppe oder für R⁵ und R⁶ gleich Methylgruppe mit R⁷ gleich Methyl-, Ethyl-, Propyl-, n-Butyl-, Isobutyl-, tertiär Butyl-, Pentyl- oder Hexylgruppe möglich.

Ganz besonders bevorzugt stellt Formel (2) 3-Buttersäurealkylester- (3-Alkylbutyrat-) bzw. Propansäurealkylesterreste, insbesondere die von Methylacrylat, Ethylacrylat, n-Butylacrylat, tertiär-Butylacrylat, Methylmethacrylat, Ethylmethacrylat, n-Butylmethacrylat oder tertiär-Butylacrylat abgeleiteten Reste, dar.

Für die Formel (4) ist R⁸ vorzugsweise eine Methyl-, Ethyl-, Propyl-, n-Butyl-, Isobutyl- oder tertiär-Butylgruppe.

Für die Formel (5) ist R⁷ vorzugsweise eine Methyl-, Ethyl-, Propyl-, n-Butyl-, Isobutyl- oder tertiär-Butylgruppe.

Die Gruppe G kann aber auch ein linearer oder verzweigter Alkylrest mit 1 bis 12 Kohlenstoffatomen, insbesondere eine Methyl-, Ethyl-, Propyl-, n-Butyl- oder Cyclohexylgruppe, oder ein aromatischer Rest mit 6 bis 12 Kohlenstoffatomen, insbesondere ein Phenyl- oder Anilinrest, sein.

Vorzugsweise haben die Polyether- Blockcopolymere der Struktur B-Aₙ ein Molekulargewicht (Mₙ) zwischen 4.000 und 100.000 g/mol (Dalton), bevorzugt zwischen 6.000 und 30.000 g/mol, insbesondere zwischen 7.500 und 18.000 g/mol und ganz besonders bevorzugt zwischen 8.000 und 12.000 g/mol (Dalton) und die Polyetherblöcke A weisen eine Polydispersität PD (M_{w}/Mₙ) von kleiner 2,5, vorzugsweise zwischen 1,00 und 2,00, besonders bevorzugt zwischen 1,10 und 1,50 auf. Die bevorzugte OH-Zahl nach DIN 53783 liegt dabei zwischen 3 und 56 mg KOH/g. Vorzugsweise ist n gleich 2 oder 3, insbesondere 2.

Unter dem Molekulargewicht Mₙ wird das zahlenmittlere Molekulargewicht des Polymeren verstanden. Dieses kann, ebenso wie das gewichtsmittlere Molekulargewicht M_{w}, durch Gelpermeationschromatographie (GPC, auch: SEC) bestimmt werden. Dieses Verfahren ist dem Fachmann bekannt. Die Polydispersität leitet sich aus den mittleren Molekulargewichten M_{w} und Mₙ ab. Sie wird berechnet als PD = M_{w}/ Mₙ.

Das für die erfindungsgemäße Umsetzung mit Diisocyanaten erforderliche Polyether-Blockcopolymer besteht aus mindestens zwei Polyoxypropylenblöcken A und einem zentralen Polymerblock B. Herstellbar ist ein derartiges Polyoxypropylen-Blockcopolymer aus einer mindestens bifunktionellen Polymerverbindung B mit mindestens zwei terminalen Hydroxylgruppen, auf der Polyoxypropylenblock A aufpolymerisiert wird.

Als Startverbindung B sind insbesondere hydroxyfunktionelle Polyoxytetramethylen-, Polyoxyethylen-, Polybutadien-, Polyisopren-, Polyacrylat-, Polymethacrylat-, Polyamid-, Polyurethan- oder Polyestereinheiten geeignet.

Hydroxyfunktionelle Polyoxytetramethylene (auch Polytetrahydrofurane oder "Poly-THF" genannt) sind kommerziell von einer Vielzahl von Herstellern in geeigneten Molekulargewichtsbereichen (ca. 800 bis 6000) erhältlich. Ebenso sind die entsprechenden hydroxyfunktionellen Polyoxyethylene (Polyethylenoxide), Polyester, Polybutadiene, oder Polyisoprene kommerziell erhältlich. Polyacrylate oder Polymethacrylate können gemäß der Lehre der EP 0 205 846 A1, der EP 0237792 A1 oder der WO 99/28363 A1 hergestellt werden. Die entsprechenden Polyamid-Derivate können durch an sich bekannte Kondensation von Di- oder Polycarbonsäuren und Diaminen unter Mitverwendung von Hydroxycarbonsäuren hergestellt werden, wie dies beispielsweise in der EP449419 A1 oder US 5 130 382 A offenbart ist. Hydroxyfunktionelle Polyurethane können in bekannter Weise aus Di- oder Polyisocyanaten mit einem stöchiometrischen Überschuß eines oder mehrerer Polyole erzeugt werden.

Das Starterpolyol B hat dabei bevorzugt ein mittleres Molekulargewicht von 500 bis 10.000 g/mol (Dalton), vorzugsweise liegt der mittlere Molekulargewichtsbereich des Starterblockes B zwischen 1.000 und 5.000 g/mol (Dalton), insbesondere zwischen 2.000 und 4.000 g/mol. Die Propoxylierung kann unter DMC-Katalyse, Katalyse durch ein oder mehrere Phosphacen- und/oder Porphyrin-Derivat(e) oder Alkalimetall-Katalyse, insbesondere Cs-Katalyse, bevorzugt unter DMC-Katalyse erfolgen.

Besonders vorteilhafte viskoelastische Eigenschaften der herzustellenden Prepolymeren werden erreicht, wenn die auf das Starterpolyol B aufpolymerisierten Polyoxypropylen-Polymerblöcke A eine enge Molmassenverteilung und damit eine niedrige Polydispersität besitzen. Dies kann beispielsweise dadurch erreicht werden, dass als Alkoxylierungskatalysator ein so genannter double-metal-cyanate-catalysator (DMC-Katalysator) verwendet wird. Beispiele für derartige DMC-Katalysatoren sind Zinkhexacyanokobaltat (II), Zinkhexacyanoferrat (III), Zinkhexacyanoferrat (II), Nickel (II) Hexacyanoferrat (II) und Kobalt (II) Hexacyanokobaltat (III). Derartige DMC-Katalysatoren sind beispielsweise in der WO 2006/100219 A1 und der dort zitierten Literatur beschrieben.

Ganz besonders eignen sich für das erfindungsgemäße Aufpolymerisieren der Polyoxypropylen-Polymerblöcke A die aus der US 4477589 bzw. US 4472560 bekannten DMC-Katalysatoren mit der allgemeinen Formel

M¹ₐ[M²(CN)_{b}(A)_{c}]_{d}·w M³Dₑ·x H₂O·y L·z HₙEₘ (II)

in der M¹ mindestens ein zweiwertiges Metallatom ausgewählt aus Zn(II), Fe(II), Co(II), Ni(II), Mn(II), Cu(II), Sn(II) oder Pb(II) bedeutet und M² mindestens eines der zwei-, drei- vier- oder fünfwertigen Metalle Fe(II), Fe(III), Co(III), Cr(III), Mn(II), Mn(III), Ir(III), Rh(III), Ru(II), V(IV) oder V(V) ist. M³ kann dabei M¹ und/oder M² sein und A, D und E bedeuten jeweils ein Anion, die gleich oder verschieden sein können. L ist ein Lösemittelligand ausgewählt aus einen Alkohol, Aldehyd, Keton, Ether, Ester, Amid, Nitril oder Sulfid oder einem Gemisch daraus; a und d sind Zahlen, die der Wertigkeit von M¹ und M² in dem Doppelmetall-Cyanidteil der allgemeinen Formel (II) entsprechen; b und c bedeuten ganze Zahlen (mit b>c), die zusammen mit a und d die Elektroneutralität des Doppelmetall-Cyanidteils der allgemeinen Formel (II) ergeben; e ist eine ganze Zahl, die der Wertigkeit von M³ entspricht, n und m sind ganze Zahlen, die die Elektroneutralität von HE ergeben; w ist eine Zahl zwischen 0,1 und 4, x eine Zahl bis zu 20; y eine Zahl zwischen 0,1 und 6, und z eine Zahl zwischen 0,1 und 5.

Für das erfindungsgemäße Aufpolymerisieren der Polyoxypropylen-Polymerblöcke A eignen sich auch die aus der CN1459332 bekannten DMC-Katalysatorkomplexe aus einem Doppelmetallcyanid der oben genannten Art, einem organischen Koordinationsagens, einem löslichen Metallsalz, einem Polyetherpolyol und einem organischen Polysiloxan. Die aus der WO97/023544 A1 bekannten DMC-Katalysatorkomplexe eignen sich ebenfalls für die Herstellung der erfindungsgemäß einzusetzenden Blockcopolymeren.

Neben der durch diese Katalysatoren erzielbaren besonders engen Molmassenverteilung zeichnen sich die so hergestellten Blockcopolymere auch durch eine hohe erzielbare mittlere Molmasse sowie durch eine sehr niedrige Zahl an Doppelbindungen an den Enden der Polymerketten aus. Die derartig erfindungsgemäß aufpolymerisierbaren Polyetherblöcke A haben typischerweise eine geringe Polydispersität PD (M_{w}/Mₙ) von höchstens 2,5, vorzugsweise zwischen1,01 und 1,15 und besonders bevorzugt zwischen 1,08 und 1,14. Zudem zeichnen sich die Produkte durch Ihre geringe terminale Ungesättigtheit aus, bestimmbar durch die Methode ASTM D4671, die unter 0,07 meq/g, insbesondere unter 0,04 meq/g und bevorzugt bei 0,02 meq/g oder kleiner liegt.

Die erfindungsgemäß eingesetzten Polyether- Blockcopolymere der Struktur (HO)-A-B-A-(OH) oder B-(A-OH)ₙ haben vorzugsweise Molekulargewichte (Mₙ) zwischen 4.000 und 40.000 g/mol (Dalton) und eine OH-Zahl nach DIN 53783 zwischen 3 und 20 mg KOH/g, insbesondere zwischen 10 und 15 mg KOH/g.

Die nachfolgende Umsetzung des Polyether- Blockcopolymeren der Struktur B-(A-OH)ₙ zum NCO-terminierten reaktiven Prepolymer erfolgt in an sich bekannter Weise mit einem stöchiometrischen Überschuß eines Diisocyanates vorzugsweise ausgewählt aus der Gruppe bestehend aus allen Isomeren des Toluoldiisocyanat (TDI), insbesondere 2,4-Toluol-diisocyanat und 2,6-Toluoldiisocyanat, entweder in isomerenreiner Form oder als Mischung mehrerer Isomerer, Naphthalin-1,5-diisocyanat, 4,4'-Diphenylmethandiisocyanat, 2,4'-Diphenylmethandiisocyanat sowie deren Mischungen, Xylen-diisocyanat (XDI), 4,4'-Dicyclohexylmethandiisocyanat (H₁₂MDI), 1-Isocyanatomethyl-3-isocyanato-1,5,5-trimethyl-diisocyanat (Isophorondiisocyanat, IPDI), Cyclohexan,1,4-diisocyanat, hydriertes Xylylendiisocyanat (H₆XDI), 1-Methyl-2,4-diisocyanato-cyclohexan, Hexan-1,6-diisocyanat (HDI), m- oder p-Tetramethylxylendiisocyanat (m-TMXDI, p-TMXDI) oder Mischungen der vorgenannten Diisocyanate. Der stöchiometrische Überschuß des Diisocyanates kann dabei zwischen 1,05 bis 6:1 (Verhältnis der NCO/OH Gruppen) betragen.

Nach vollständiger Umsetzung kann das überschüssige monomere Diisocyanat aus dem Reaktionsgemisch durch Destillations-, Extraktions-, chromatographische oder Kristallisationsverfahren entfernt werden.

Erfindungsgemäß schließt sich eine Umsetzung der freien Isocyanatgruppen des vorgenannt erhaltenen Polyurethan-Prepolymers mit einem Aminosilan der allgemeinen Formel (1) an.

Das Aminosilan kann dabei ausgewählt werden aus Aminoalkylalkoxysilanen, wie 3-Aminopropyl-trimethoxysilan, 3-Aminopropyl-triethoxysilan (beispielsweise Dynasilan AMMO, Fa. Evonik oder Geniosil GF 96, Fa. Wacker), N-(n-butyl)-3-Aminopropyltrimethoxysilan, 3-aminopropylmethyldimethoxysilan, 3-Aminopropylmethyldiethoxysilan, N-Cyclohexylaminomethylmethyldiethoxysilan, N-Cyclohexylaminomethyltriethoxysilan, N-Phenylaminomethyltrimethoxysilan (z. B. Geniosil XL 973, Fa. Wacker), N-Cyclohexyl-3-aminopropyltrimethoxysilan, 1-Anilinomethyldimethoxymethylsilan (z. B. Geniosil XL972, Fa. Wacker), N-Phenyl-3-Aminopropyltrimethoxysilan (z. B. Y-9669 der Fa. Momentive) oder Bis(3-triethoxysilylpropyl)amin (Silquest A-1170, Fa. GE). Es kann aber auch ein Produkt einer Michael-Addition eines der vorgenannten Aminosilane mit einem (Meth)acrylsäurealkylester, Acrylnitril, Maleinimid, insbesondere N-Alkylmaleinimid, oder einem Maleinsäurealkylester verwendet werden, wobei selbstverständlich nur Aminosilane mit primären Aminogruppen zur Michael-Addition eingesetzt werden können. Als (Meth)acrylsäurealkylester eignen sich insbesondere folgende Methacrylsäurealkylester bzw. Acrylsäurealkylester: Methylacrylat, Ethylacrylat, Butylacrylat, Methylmethacrylat, Ethylmethacrylat, Butylmethacrylat, Die Produkte der Michael-Addition enthalten dann eine Gruppe G gemäß einer der Formeln (2) bis (5).

Die Kleb- und Dichtstoff-Zubereitungen oder Beschichtungsmittel können neben den vorgenannten reaktiven, harnstoffgebundenen Alkoxysilanen noch weitere Hilfs- und Zusatzstoffe enthalten, die diesen Zubereitungen verbesserte elastische Eigenschaften, verbesserte Rückstellfähigkeit, ausreichend lange Verarbeitungszeit, schnelle Durchhärtungsgeschwindigkeit und geringe Restklebrigkeit verleihen. Zu diesen Hilfs- und Zusatzstoffen gehören beispielsweise Weichmacher, Stabilisatoren, Antioxidantien, Füllstoffe, Reaktivverdünner, Trockenmittel, Haftvermittler und UV-Stabilisatoren, rheologische Hilfsmittel, Farbpigmente oder Farbpasten und/oder gegebenenfalls auch im geringen Umfang Lösungsmittel.

Als Weichmacher geeignet sind beispielsweise Adipinsäureester, Azelainsäureester, Benzoesäureester, Buttersäureester, Essigsäureester, Ester höherer Fettsäuren mit etwa 8 bis etwa 44 C-Atomen, Ester OH-Gruppen tragender oder epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, Propionsäureester, Sebacinsäureester, Sulfonsäureester (z.B. "Mesamoll", Alkylsulfonsäurephenylester, Fa. Bayer), Thiobuttersäureester, Trimellithsäureester, Zitronensäureester sowie Ester auf Nitrocellulose- und Polyvinylacetat-Basis, sowie Gemische aus zwei oder mehr davon. Besonders geeignet sind die asymmetrischen Ester von Adipinsäuremonooctylester mit 2-Ethylhexanol (Edenol DOA, Fa. Cognis Deutschland GmbH, Düsseldorf) oder auch Ester der Abietinsäure.

Beispielsweise eignen sich von den Phthalsäureestem Dioctylphthalat (DOP), Dibutylphthalat, Diisoundecylphthalat (DIUP) oder Butylbenzylphthalat (BBP) oder deren abgeleitete hydrierte Derivate, von den Adipaten Dioctyladipat (DOA), Diisodecyladipat, Diisodecylsuccinat, Dibutylsebacat oder Butyloleat.

Ebenfalls als Weichmacher geeignet sind die reinen oder gemischten Ether monofunktioneller, linearer oder verzweigter C₄₋₁₆-Alkohole oder Gemische aus zwei oder mehr verschiedenen Ethern solcher Alkohole, beispielsweise Dioctylether(erhältlich als Cetiol OE, Fa. Cognis Deutschland GmbH, Düsseldorf).

Ferner eignen sich als Weichmacher endgruppenverschlossene Polyethylenglykole. Geeignet sind beispielsweise Polyethylen- oder Polypropylenglykoldi-C₁₋₄-alkylether, insbesondere die Dimethyl- oder Diethylether von Diethylenglykol oder Dipropylenglykol, sowie Gemische aus zwei oder mehr davon.

Besonders bevorzugt sind jedoch endgruppenverschlossene Polyethylenglykole, wie Polyethylen- oder Polypropylenglykoldialkylether, wobei der Alkylrest ein bis vier C-Atome beträgt, und insbesondere die Dimethyl- und Diethylether von Diethylenglykol und Dipropylenglykol. Insbesondere mit Dimethyldiethylenglykol wird eine auch unter ungünstigeren Auftragungsbedingungen (geringe Luftfeuchtigkeit, niedrige Temperatur) eine akzeptable Aushärtung erreicht. Für weitere Einzelheiten zu Weichmachern wird auf die einschlägige Literatur der Technischen Chemie verwiesen.

Weichmacher können in den Zubereitungen zwischen 0 und 40, vorzugsweise zwischen 0 und 20 Gew.% (bezogen auf die Gesamtzusammensetzung) in der Zubereitung mit verwendet werden.

Unter "Stabilisatoren" sind beispielsweise Antioxidantien, UV-Stabilisatoren oder Hydrolyse-Stabilisatoren zu verstehen. Beispiele hierfür sind die handelsüblichen sterisch gehinderten Phenole und/oder Thioether und/oder substituierten Benzotriazole wie z.B. Tinuvin 327 (Fa. Ciba Specialty Chemicals) und/oder Amine vom "HALS"-Typ (Hindered Amine Light Stabilizer), wie z.B. Tinuvin 770 (Fa. Ciba Specialty Chemicals). Es ist im Rahmen der vorliegenden Erfindung bevorzugt, wenn ein UV-Stabilisator eingesetzt wird, der eine Silylgruppe trägt und beim Vernetzen bzw. Aushärten in das Endprodukt eingebaut wird. Hierzu besonders geeignet sind die Produkte Lowilite 75, Lowilite 77 (Fa. Great Lakes, USA). Ferner können auch Benzotriazole, Benzophenone, Benzoate, Cyanacrylate, Acrylate, sterisch gehinderte Phenole, Phosphor und / oder Schwefel zugegeben werden. Die erfindungsgemäße Zubereitung kann bis zu etwa 2 Gew.-%, vorzugsweise etwa 1 Gew.-% an Stabilisatoren enthalten. Ferner kann die erfindungsgemäße Zubereitung weiterhin bis zu etwa 7 Gew.-%, insbesondere bis zu etwa 5 Gew.-% Antioxidantien enthalten.

Als Katalysatoren können alle bekannten Verbindungen eingesetzt werden, die die hydrolytische Spaltung der hydrolysierbaren Gruppen der Silangruppierungen sowie die anschließende Kondensation der Si-OH-Gruppe zu Siloxangruppierungen (Vernetzungsreaktion bzw. Haftvermittlungsfunktion) katalysieren können. Beispiele hierfür sind Titanate wie Tetrabutyltitanat und Tetrapropyltitanat, Zinncarboxylate wie Dibutylzinndilaulat (DBTL), Dibutylzinndiacetat, Dibutylzinndiethylhexanoat, Dibutylzinndioctoat, Dibutylzinndimethylmaleat, Dibutylzinndiethylmaleat, Dibutylzinndibutylmaleat, Dibutylzinndiiosooctylmaleat, Dibutylzinnditridecylmaleat, Dibutylzinndibenzylmaleat, Dibutylzinnmaleat, Dibutylzinndiacetat, Zinnoctaoat, Dioctylzinndistealeat, Dioctylzinndilaulat, Dioctylzinndiethylmaleat, Dioctylzinndiisooctylmaleat, Dioctylzinndiacetat, und Zinnnaphthenoat; Zinnalkoxide wie Dibutylzinndimethoxid, Dibutylzinndiphenoxid, und Dibutylzinndiisoproxid; Zinnoxide wie Dibutylzinnoxid, und Dioctylzinnoxid; Reaktionsprodukte zwischen Dibutylzinnoxiden und Phthalsäureestern, Dibutylzinnbisacetylacetonat; Organoaluminumverbindungen wie Aluminumtrisacetylacetonat, Aluminumtrisethylacetoacetat, und Diisopropoxyaluminum-ethylacetoacetat; Chelatverbindungen wie Zirconumtetraacetylacetonat, und Titantetraacetylacetonat; Bleioctanoat; Aminverbindungen oder ihre Salze mit Carbonsäuren, wie Butylamin, Octylamin, Laurylamin, Dibutylamine, Monoethanolamine, Diethanolamine, Triethanolamin, Diethylenetriamin, Triethylenetetramin, Oleylamine, Cyclohexylamin, Benzylamin, Diethylaminopropylamin, Xylylenediamin, Triethylenediamin, Guanidin, Diphenylguanidin, 2,4,6-tris(dimethylaminomethyl)phenol, Morpholin, N-methylmorpholin, 2-Ethyl-4-methylimidazole, und 1,8-Diazabicyclo-(5,4,0)-undecen-7 (DBU), ein niedermolekulares Polyamid Harz erhalten aus einem Überschuß eines Polyamins und einer Polybasischen Säure, Addukte aus einem Polyamin im Überschuß mit einem Epoxid, Silanhaftvermittler mit Aminogruppen, wie 3-Aminopropyltrimethoxysilan, und N-(β-aminoethyl)aminopropylmethyldimethoxysilan. Der Katalysator, bevorzugt Mischungen mehrerer Katalysatoren, kann in einer Menge von 0,01 bis etwa 5 Gew.-% bezogen auf das Gesamtgewicht der Zubereitung eingesetzt werden.

Die erfindungsgemäße Zubereitung kann zusätzlich Füllstoffe enthalten. Hier eignen sich beispielsweise Kreide, Kalkmehl, gefällte und/oder pyrogene Kieselsäure, Zeolithe, Bentonite, Magnesiumcarbonat, Kieselgur, Tonerde, Ton, Talkum, Titanoxid, Eisenoxid, Zinkoxid, Sand, Quarz, Flint, Glimmer, Glaspulver und andere gemahlene Mineralstoffe. Weiterhin können auch organische Füllstoffe eingesetzt werden, insbesondere Ruß, Graphit, Holzfasern, Holzmehl, Sägespäne, Zellstoff, Baumwolle, Pulpe, Baumwolle, Hackschnitzel, Häcksel, Spreu, gemahlene Walnussschalen und andere Faserkurzschnitte. Ferner können auch Kurzfasern wie Glasfaser, Glasfilament, Polyacrylnitril, Kohlefaser, Kevlarfaser oder auch Polyethylenfasern zugesetzt werden. Aluminiumpulver ist ebenfalls als Füllstoff geeignet.

Die pyrogenen und/oder gefällten Kieselsäuren weisen vorteilhaft eine BET-Oberfläche von 10 bis 90 m²/g auf. Bei Ihrer Verwendung bewirken sie keine zusätzliche Erhöhung der Viskosität der erfindungsgemäßen Zubereitung, tragen aber zu einer Verstärkung der gehärteten Zubereitung bei.

Es ist ebenso denkbar, pyrogene und/oder gefällte Kieselsäuren mit einer höheren BET-Oberfläche, vorteilhafterweise mit 100 - 250 m²/g, insbesondere 110 - 170 m²/g, als Füllstoff einzusetzen. Aufgrund der höheren BET-Oberfläche, kann man den gleichen Effekt, z.B. Verstärkung der gehärteten Zubereitung, bei einem geringeren Gewichtsanteil Kieselsäure erzielen. Somit kann man weitere Stoffe einsetzen, um die erfindungsgemäße Zubereitung hinsichtlich anderer Anforderungen zu verbessern.

Für den Fall, dass anstelle saurer Füllstoffe ein basischer Füllstoff eingesetzt werden soll, eignen sich zum Beispiel Calciumcarbonate (Kreiden), wobei kubische, nicht kubische, amorphe und andere Modifikationen eingesetzt werden können. Vorzugsweise sind die eingesetzten Kreiden oberflächenbehandelt beziehungsweise beschichtet. Als Beschichtungsmittel werden bevorzugt Fettsäuren, Fettsäureseifen und Fettsäureester eingesetzt, beispielsweise Laurinsäure, Palmitinsäure oder Stearinsäure, Natrium- oder Kaliumsalze solcher Säuren oder ihre Alkylester. Darüber hinaus kommen aber auch andere oberflächenaktive Substanzen wie Sulfatester langkettiger Alkohole oder Alkylbenzolsulfonsäuren beziehungsweise deren Natrium- oder Kaliumsalze oder auch Kopplungsreagenzien auf der Basis von Silanen oder Titanaten in Frage. Mit der Oberflächenbehandlung der Kreiden ist häufig eine Verbesserung der Verarbeitbarkeit sowie der Klebkraft und auch der Wetterresistenz der Zusammensetzungen verbunden. Das Beschichtungsmittel wird üblicherweise in einem Anteil von 0,1 bis 20 Gew.%, bevorzugt 1 bis 5 Gew.%, bezogen auf das Gesamtgewicht der Rohkreide, eingesetzt.

Je nach angestrebtem Eigenschaftsprofil können gefällte oder gemahlene Kreiden verwendet werden. Gemahlene Kreiden können zum Beispiel aus natürlichem Kalk, Kalkstein oder Marmor durch mechanisches Zermahlen hergestellt werden, wobei trockene oder feuchte Methoden zur Anwendung gelangen können. Je nach Mahlverfahren werden Fraktionen mit unterschiedlicher durchschnittlicher Teilchengröße erhalten. Vorteilhafte spezifische Oberflächenwerte (BET) liegen zwischen 1,5 m²/g und 50 m²/g.

Ferner eignen sich als Füllstoffe Hohlkugeln mit einer mineralischen Hülle oder einer Kunststoffhülle. Dies können beispielsweise Glashohlkugeln sein, die unter den Handelsbezeichnungen Glass Bubbles® kommerziell erhältlich sind. Hohlkugeln auf Kunststoffbasis, z.B. Expancel® oder Dualite®, werden beispielsweise in der EP 0 520 426 B1 beschrieben. Diese sind aus anorganischen oder organischen Stoffen zusammengesetzt, jede mit einem Durchmesser von 1 mm oder weniger, bevorzugt von 500 µm oder weniger.

Für manche Anwendungen sind Füllstoffe bevorzugt, die den Zubereitungen Thixotropie verleihen. Solche Füllstoffe werden auch als rheologische Hilfsmittel beschrieben, z. B. hydriertes Rizinusöl, Fettsäureamide oder quellbare Kunststoffe wie PVC. Um gut aus einer geeigneten Dosiervorrichtung (z. B. Tube) auspressbar zu sein, besitzen solche Zubereitungen eine Viskosität von 3.000 bis 15.000, vorzugsweise 40.000 bis 80.000 mPas oder auch 50.000 bis 60.000 mPas.

Die Füllstoffe werden vorzugsweise in einer Menge von 1 bis 80 Gew.-%, vorzugsweise von 5 bis 60 Gew.%, bezogen auf das Gesamtgewicht der Zubereitung eingesetzt.

Beispiele für geeignete Pigmente sind Titandioxid, Eisenoxide oder Ruß.

Häufig ist es sinnvoll, die erfindungsgemäßen Zubereitungen durch Trockenmittel weiter gegenüber eindringender Feuchtigkeit zu stabilisieren, um die Lagerbarkeit (shelf-life) noch weiter zu erhöhen. Es besteht gelegentlich auch Bedarf, die Viskosität des erfindungsgemäßen Kleb- oder Dichtstoffs für bestimmte Anwendungen durch Verwendung eines Reaktivverdünners zu erniedrigen. Als Reaktivverdünner kann man alle Verbindungen, die mit dem Kleb- oder Dichtstoff unter Verringerung der Viskosität mischbar sind und über mindestens eine mit dem Bindemittel reaktive Gruppe verfügen, einsetzen.

Als Reaktivverdünner kann man z.B. folgende Stoffe einsetzen: mit Isocyanatosilanen umgesetzte Polyalkylenglykole (z.B. Synalox 100-50B, DOW), Carbamatopropyltrimethoxysilan, Alkyltrimethoxysilan, Alkyltriethoxysilan, Methyltrimethoxysilan, Methyltriethoxysilan sowie Vinyltrimethoxysilan (Dynasylan VTMO, Fa. Evonik oder Geniosil XL 10, Fa. Wacker), Vinyltriethoxysilan, Phenyltrimethoxysilan, Phenyltriethoxysilan, Octyltrimethoxysilan, Tetraethoxysilan, Vinyldimethoxymethylsilan (XL12, Wacker), Vinyltriethoxysilan (GF56, Wacker), Vinyltriacetoxysilan (GF62, Wacker), Isooctyltrimethoxysilan (IO Trimethoxy), Isooctyltriethoxysilan (IO Triethoxy, Wacker), N-Trimethoxysilylmethyl-O-methylcarbamat (XL63, Wacker), N-Dimethoxy(methyl)silylmethyl-O-methyl-carbamat (XL65, Wacker), Hexadecyltrimethoxysilan, 3-Octanoylthio-1-propyltriethoxysilan, Aminosilane wie z.B. 3-Aminopropyltrimethoxysilan (Dynasylan AMMO, Fa. Evonik oder Geniosil GF96, Fa. Wacker) und Teilhydrolysate der vorgenannten Verbindungen.

Ferner sind ebenfalls folgende Polymere von Kaneka Corp. als Reaktivverdünner einsetzbar: MS S203H, MS S303H, MS SAT 010, und MS SAX 350.

Ebenso kann man silan-modifizierte Polyether verwenden, die sich z.B. aus der Umsetzung von Isocyanatosilan mit Synalox Typen ableiten.

In gleicher Weise können die erfindungsgemäßen Prepolymeren in Abmischung mit üblichen an sich bekannten Polymeren oder Prepolymeren, ggf. unter Mitverwendung der vorgenannten Reaktivverdünner, Füllstoffe und weiterer Hilf- und Zusatzstoffe, eingesetzt werden. "Übliche Polymere oder Prepolymere", können dabei ausgewählt werden aus Polyestern, Polyoxyalkylenen, Polyacrylaten, Polymethacrylaten oder deren Mischungen, wobei diese frei von mit Siloxangruppen reaktiven Gruppen sein können, aber ggf. auch Alkoxysilylgruppen oder Hydroxylgruppen aufweisen können.

Eine Vielzahl der vorgenannten silanfunktionellen Reaktivverdünner haben gleichzeitig eine trocknende und / oder haftvermittelnde Wirkung in der Zubereitung. Diese Reaktivverdünner werden vorzugsweise in Mengen zwischen 0,1 und 15 Gew.%, insbesondere zwischen 1 und 5 Gew.%, bezogen auf die Gesamtzusammensetzung der Zubereitung eingesetzt.

Als Haftvermittler eignen sich aber auch so genannte Klebrigmacher wie Kohlenwasserstoffharze, Phenolharze, Terpen-Phenolharze, Resorcinharze oder deren Derivate, modifizierte oder unmodifizierte Harzsäuren bzw. -ester (Abietinsäurederivate), Polyamine, Polyaminoamide, Anhydride und Anhydrid-enthaltende Copolymere. Auch der Zusatz von Polyepoxidharzen in geringen Mengen kann bei manchen Substraten die Haftung verbessern. Hierfür werden dann vorzugsweise die festen Epoxidharze mit einem Molekulargewicht von über 700 in fein gemahlener Form eingesetzt. Falls Klebrigmacher als Haftvermittler eingesetzt werden, hängt deren Art und Menge von der Kleb- / Dichtstoffzusammensetzung ab sowie von dem Substrat, auf welches diese appliziert wird. Typische klebrigmachende Harze (Tackifier) wie z.B. Terpenphenolharze oder Harzsäurederivate können in Konzentrationen zwischen 5 und 20 Gew.% verwendet werden, typische Haftvermittler wie Polyamine, Polyaminoamide oder Phenolharze oder Resorcinderivate können mit Gehalten zwischen 0,1 und 10 Gew.%, bezogen auf die Gesamtzusammensetzung der Zubereitung verwendet werden.

Die Herstellung der erfindungsgemäßen Zubereitung erfolgt nach bekannten Verfahren durch inniges Vermischen der Bestandteile in geeigneten Dispergieraggregaten, z. B. Schnellmischer, Kneter, Planetenmischer, Planetendissolver, Innenmischer, so genannte "Banburymischer", Doppelschneckenextruder und ähnliche dem Fachmann bekannte Mischaggregate.

Eine bevorzugte Ausführungsform einer erfindungsgemäßen Zubereitung kann enthalten:
- 5 bis 50 Gew.-%, bevorzugt 10 bis 40 Gew.-% einer oder mehrerer Verbindungen der erfindungsgemäßen reaktiven, harnstoffgebundenen Alkoxysilane,
- 0 bis 30 Gew.-%, insbesondere weniger als 20 Gew.-%, besonders bevorzugt weniger als 10 Gew.-% Weichmacher,
- 0 bis 80 Gew.-%, bevorzugt 20 bis 60 Gew.-%, besonders bevorzugt 30 bis 55 Gew.-% Füllstoffe.

Ferner kann die Ausführungsform weitere Hilfsstoffe enthalten.

Die Gesamtheit aller Bestandteile summiert sich zu 100 Gew.-%, wobei sich die Summe der oben aufgeführten Hauptbestandteile allein nicht zu 100 Gew.-% addieren muss.

Die erfindungsgemäßen reaktiven, harnstoffgebundenen Alkoxysilan Prepolymere härten mit der umgebenden Luftfeuchtigkeit zu niedermoduligen Polymeren aus, so dass aus diesen Prepolymeren mit den vorgenannten Hilfs- und Zusatzstoffen niedermodulige, feuchtigkeitshärtende Kleb- und Dichtstoffzubereitungen herstellbar sind.

In den nachfolgenden Ausführungsbeispielen soll die Erfindung näher erläutert werden, wobei die Auswahl der Beispiele keine Beschränkung des Umfangs des Erfindungsgegenstandes darstellen soll.

### Beispiele

Bei der Herstellung der Polyole wurden DMC-Katalysatoren verwendet, die sich nach der folgenden Schrift ableiten:
a) Modifikation A nach Shell (US 4477589, Beispiel 6, beschleunigte Variante)

### Polyol 1: Herstellung PPG-PEG1000-PPG Blockcopolymer

In einem 2 I Reaktor wurden 63 g PEG (Mₙ 1000) vorgelegt und über Nacht ausgeheizt. Anschließend wurden 200 ppm DMC-Katalysator zugesetzt, dreimal sekuriert und bei 110°C über vier Stunden 583 g Propylenoxid zugegeben. Nach der Zugabe wird eine Stunde nachgerührt und der Ansatz mit 300 ppm Pentaerythritol-tetrakis[3-(3,5-di-tert-butyl-4-hydroxyphenyl)-propionat] (Irganox 1010) zur Stabilisierung abgefüllt.

Polyol 1 weist eine OHZ von 13 bei einer Viskosität von 5.000 mPas bei RT auf.

### Polyol 2: Herstellung PPG-PTHF1000-PPG Blockcopolymer

In einem 2 I Reaktor wurden 63 g Poly-THF (Mₙ 1000) vorgelegt und über Nacht ausgeheizt. Anschließend wurden 200 ppm DMC-Katalysator zugesetzt, dreimal sekuriert und bei 110°C über vier Stunden 580 g Propylenoxid zugegeben. Nach der Zugabe wird eine Stunde nachgerührt und der Ansatz mit 300 ppm Irganox 1010 zur Stabilisierung abgefüllt.

Polyol 2 weist eine OHZ von 13 bei einer Viskosität von 7.500 mPas bei RT auf.

### Polyol 3: Herstellung PPG-PTHF2000-PPG Blockcopolymer

In einem 2 I Reaktor wurden 83 g Poly-THF (Mₙ 2000) vorgelegt und über Nacht ausgeheizt. Anschließend wurden 200 ppm DMC-Katalysator zugesetzt, dreimal sekuriert und bei 110°C über vier Stunden 470 g Propylenoxid zugegeben. Nach der Zugabe wird eine Stunde nachgerührt und der Ansatz mit 300 ppm Irganox 1010 zur Stabilisierung abgefüllt.

Polyol 3 weist eine OHZ von 14 bei einer Viskosität von 12.800 mPas bei RT auf.

### Polyol 4: Herstellung PPG-PTHF2000-PPG Blockcopolymer

In einem 2 I Reaktor wurden 117 g Polybutadienol der Firma Sartomer (Mₙ 5000) vorgelegt und über Nacht ausgeheizt. Anschließend wurden 200 ppm DMC-Katalysator zugesetzt, dreimal sekuriert und bei 110°C über vier Stunden 383 g Propylenoxid zugegeben. Nach der Zugabe wird eine Stunde nachgerührt und der Ansatz mit 300 ppm Irganox 1010 zur Stabilisierung abgefüllt.

Polyol 4 wird in einer Ausbeute von 471 g erhalten und weist eine OHZ von 14 bei einer Viskosität von 12.800 mPas bei RT auf.

### Herstellung harnstoffgebundener Alkoxysilane

### Herstellung sekundärer Aminosilane

140 g (1,2 mmol) tert.-Butylacrylat werden mit 210 g (1,2 mmol) Aminopropyltrimethoxysilan (Geniosil GF 96) langsam versetzt und 8 Stunden bei Raumtemperatur gerührt. Eine IRspektroskopische Aufnahme zeigt das Ende der Umsetzung an. Das Produkt wird feuchtigkeitssicher abgefüllt und für die Herstellung der folgenden silanterminierten Polyurethane verwendet.

### Allgemeine Herstellvorschrift für harnstoffgebundene Alkoxysilane

300 g Polyol werden mit 0,7 g Catalyst 315 (Fa. OMG-Borchers) versetzt und bei 80°C für eine Stunde getrocknet. Anschließend werden bei 80°C 12 g TDI-100 zugegeben und bei 80°C solange gerührt, bis der theoretische NCO-Wert titrametrisch ermittelt wird. Dann werden 24,6 g eines Aminosilanadduktes (gemäß vorstehender Vorschrift hergestellt) hinzugegeben und eine Stunde nachgerührt. Der Ansatz wird mit 7 g Vinyltrimethoxysilan (Geniosil XL 10) und 5 g eines sterisch gehinderten Amins (Tinuvin 765) zur Stabilisierung versetzt.

### Herstellung Vergleichsbeispiel

282 g (15 mmol) Polypropylenglykol 18000 (OHZ=6,0) wurden in einem 500 ml Dreihalskolben bei 100°C im Vakuum getrocknet. Unter Stickstoffatmosphäre wurde bei 80°C 0,1 g Catalyst 315 (Fa. OMG-Borchers) hinzugegeben und anschließend mit 7,0 g (31 mmol) Isocyanatopropyltrimethoxysilan (%NCO=18,4) versetzt. Nach einstündigem Rühren bei 80°C wurde das entstandene Polymer abgekühlt und mit 6 g Vinyltrimethoxysilan und 4,5 g Tinuvin765 versetzt.

Die gemäß allgemeiner Herstellvorschrift für harnstoffgebundene Alkoxysilane und gemäß Vergleichsbeispiel hergestellten Produkte werden in der folgenden Aufstellung und in Tabelle 1 als "Polymer" bezeichnet.

| ***Starter*** | ***OHZ*** | ***Viskosität Polymer in mPas*** |
|---|---|---|
| Polyol 1 | 12.8 | 34,000 |
| Polyol 2 | 13.3 | 80,400 |
| Polyol 3 | 14.8 | 77,600 |
| Polyol 4 | 14.4 | 195,000 |
| Vergleich | 6 | 32,000 |

Die silanterminierten Polymere wurden anschließend in einer Klebstoffformulierung getestet. Die Ergebnisse sind in Tabelle 1 zusammengefasst.

**Tabelle 1**

| **Polymer** | | **Vergleich** | **Polyol 1** | **Polyol 2** | **Polyol 3** | **Polyol 4** |
|---|---|---|---|---|---|---|
| ***Polymer*** | % Gew-Teile | 28,00 | 28,00 | 28,00 | 28,00 | 28,00 |

| ***Weichmacher*** | | | | | | |
|---|---|---|---|---|---|---|
| Diisoundecylphthalat (DIUP) | | 12,50 | 12,50 | 12,50 | 12,50 | 12,50 |
| ***Füllstoffe*** | | | | | | |
| Omya 302 | | 57,00 | 57,00 | 57,00 | 57,00 | 57,00 |
| ***Additive*** | | | | | | |
| Dynasylan VTMO / Geniosil XL10 | % Gew-Teile | 1,40 | 1,40 | 1,40 | 1,40 | 1,40 |
| Dynasylan AMMO / Geniosil GF96 | % Gew-Teile | 1,00 | 1,00 | 1,00 | 1,00 | 1,00 |

| ***Katalysator*** | | | | | | |
|---|---|---|---|---|---|---|
| DBTL (4 Tropfen = 0,11g) | % Gew-Teile | 0,10 | 0,10 | 0,10 | 0,10 | 0,10 |
| **Summe** | | **100,00** | **100,00** | **100,00** | **100,00** | **100,00** |

| ***Ergebnisse 7 Tage*** | | | | | | |
|---|---|---|---|---|---|---|
| SOT in min (Klimaraum) | - | 20 | 30 | 30 | 30 | 17 |
| Durchhärtung in mm | | 1,90 | 2,35 | 2,25 | 2,10 | 1,90 |
| Buche/Buche (N/mm2) | | 2,90 | 3,80 | 3,50 | 4,40 | 3,08 |
| Alu/Buche (N/mm2) | | 2,50 | 3,26 | 3,35 | 4,18 | 2,93 |
| ABS/Buche (N/mm2) | | 0,48 | 1,70 | 1,35 | 1,32 | 0,47 |

Die Ergebnisse beweisen, dass Zusammensetzungen auf der Basis erfindungsgemäßer harnstoffgebundener Alkoxysilan-Polymere sowohl ein signifikant verbessertes Haftspektrum als auch bessere Festigkeiten als eine vergleichbare Formulierung auf der Basis eines silanterminierten Polyetherurethans zeigen.

## Patentansprüche

1. Reaktive, harnstoffgebundene Alkoxysilane, erhältlich durch
Umsetzung eines OH-terminierten Polyether-Blockcopolymers der Struktur B-Aₙ, in dem n gleich 2 bis 10 ist und in dem der zentrale Block B aus Polyoxytetramethylen-, Polyoxyethylen-, Polybutadien-, Polyisopren, Polyacrylat-, Polymethacrylat-, Polyamid-, Polyurethan- oder Polyestereinheiten und die Blöcke A aus Polyoxypropyleneinheiten bestehen, mit einem stöchiometrischen Überschuss Diisocyanat zu einem NCO-terminierten Prepolymer Q; und anschließende
Umsetzung des Prepolymers Q mit einer Silanverbindung der Formel (1), 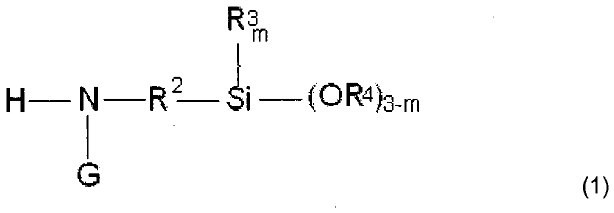 worin G eine organische Gruppe oder Wasserstoff ist, R² eine zweiwertige Alkylengruppe mit 1 bis 10 Kohlenstoffatomen oder eine -(CH₂)ₒ-NR¹-(CH₂)ₚ- Gruppe ist, worin o und p gleich oder verschieden sind und gleich 2 bis 6 sind und R¹ eine organische Gruppe mit maximal 10 Kohlenstoffatomen ist, R³ ein linearer oder verzweigter Alkylrest mit 1 bis 6 Kohlenstoffatomen ist, R⁴ ein linearer oder verzweigter Alkylrest mit 1 bis 4 Kohlenstoffatomen ist und m gleich 0, 1 oder 2 ist.

2. Reaktive, harnstoffgebundene Alkoxysilane nach Anspruch 1, **dadurch gekennzeichnet, dass** die Gruppe G durch die folgenden Formeln (2) bis (5) darstellbar ist: 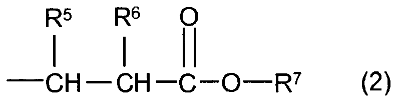 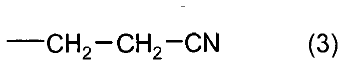 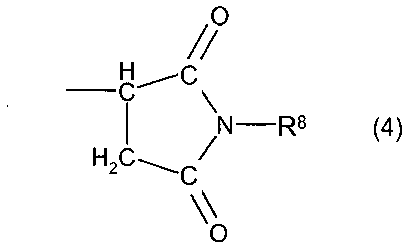 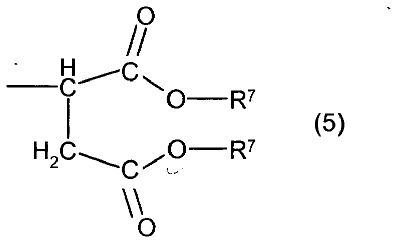 wobei R⁵ und R⁶ unabhängig voneinander ein Wasserstoffatom oder eine Methylgruppe, R⁷ ein linearer oder verzweigter Alkylrest mit 1 bis 6 Kohlenstoffatomen und R⁸ ein linearer oder verzweigter Alkylrest mit 1 bis 8 Kohlenstoffatomen sind.

3. Reaktive, harnstoffgebundene Alkoxysilane nach mindestens einem der Ansprüche 1 oder 2, **dadurch gekennzeichnet, dass** die Polyetherblöcke A eine Polydispersität PD (M_{w}/Mₙ) von kleiner als 2,5 aufweisen.

4. Reaktive, harnstoffgebundene Alkoxysilane nach mindestens einem der vorstehenden Ansprüche, **dadurch gekennzeichnet, dass** das Polyether- Blockcopolymer der Struktur B-Aₙ ein Molekulargewicht Mn zwischen 4.000 und 100.000 g/mol (Dalton) aufweist.

5. Reaktive, harnstoffgebundene Alkoxysilane nach mindestens einem der vorstehenden Ansprüche, **dadurch gekennzeichnet, dass** n gleich 2 ist.

6. Verfahren zur Herstellung eines harnstoffgebundenen Alkoxysilans umfassend das Umsetzen mindestens einer OH-terminierten Polyetherverbindung mit der Struktur B-Aₙ, in der n gleich 2 bis 10 ist und der zentrale Block B aus Polyoxytetramethylen-, Polyoxyethylen-, Polybutadien-, Polyisopren, Polyacrylat-, Polymethacrylat-, Polyamid-, Polyurethan- oder Polyestereinheiten und die Blöcke A aus Polyoxypropyleneinheiten bestehen, mit einem stöchiometrischen Überschuss eines Diisocyanats zu einem NCO-terminierten Prepolymer, gefolgt von der Umsetzung dieses Prepolymers mit reaktiven Isocyanatgruppen mit einer Silanverbindung der Formel (1): 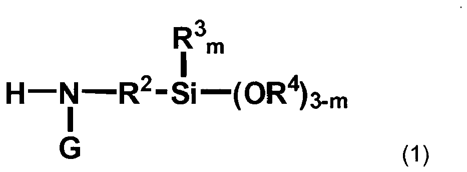 in der G eine organische Gruppe oder Wasserstoff ist, R² eine zweiwertige Alkylengruppe mit 1 bis 10 Kohlenstoffatomen oder eine -(CH₂)ₒ-NR¹-(CH₂)ₚ- Gruppe, worin o und p gleich oder verschieden sind und gleich 2 bis 6 sind und R¹ eine organische Gruppe mit maximal 10 Kohlenstoffatomen ist, R³ ein linearer oder verzweigter Alkylrest mit 1 bis 6 Kohlenstoffatomen ist, R⁴ ein linearer oder verzweigter Alkylrest mit 1 bis 4 Kohlenstoffatomen ist und m gleich 0, 1 oder 2 ist.

7. Verfahren nach Anspruch 6, **dadurch gekennzeichnet, dass** die OH-terminierte Polyetherverbindung der Struktur B-Aₙ eine OH-Zahl nach DIN 53783 zwischen 3 und 56 mg KOH/g aufweist.

8. Verfahren nach Anspruch 6 oder 7, **dadurch gekennzeichnet, dass** nach der Umsetzung der OH-terminierten Polyetherverbindung mit dem Diisocyanat das nicht umgesetzte monomere Diisocyanat aus dem Reaktionsgemisch entfernt wird.

9. Verfahren nach mindestens einem der Ansprüche 6 bis 8, **dadurch gekennzeichnet, dass** das Diisocyanat ausgewählt wird aus der Gruppe bestehend aus 2,4-Toluol-diisocyanat, 2,6-Toluol-diisocyanat, 4,4'-Diphenyl-methandiisocyanat, 2,4'-Diphenyl-methandiisocyanat, 1-Isocyanato-3,3,5-trimethyl-5-isocyanatomethylcyclohexan (Isophorondiisocyanat, IPDI), 4,4'-Dicyclohexylmethan-diisocyanat-Isomeren, Tetramethylxylylendiisocyanat (TMXDI), und Mischungen davon.

10. Verwendung einer Zubereitung enthaltend ein oder mehrere harnstoffgebundene Alkoxysilan(e) nach mindestens einem der Ansprüche 1 bis 5 oder hergestellt nach einem Verfahren nach mindestens einem der Ansprüche 6 bis 9 als Klebstoff, Dichtstoff oder Beschichtungsmittel.

## Claims

1. Reactive, urea-bonded alkoxysilanes, obtainable by reacting an OH-terminated polyether block copolymer of the structure B-Aₙ, in which n is equal to 2 to 10 and in which the central block B consists of polyoxytetramethylene, polyoxyethylene, polybutadiene, polyisoprene, polyacrylate, polymethacrylate, polyamide, polyurethane or polyester units and the blocks A consist of polyoxypropylene units, with a stoichiometric excess of diisocyanate to form an NCO-terminated prepolymer Q; and subsequent reaction of the prepolymer Q with a silane compound of the formula (1), 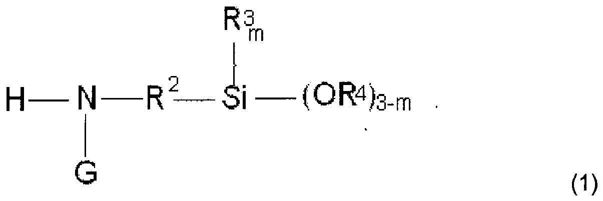 in which G is an organic group or hydrogen, R² is a divalent alkylene group having 1 to 10 carbon atoms or a -(CH₂)ₒ-NR¹-(CH₂)ₚ group, in which o and p are identical or different and equal to 2 to 6 and R¹ is an organic group having a maximum of 10 carbon atoms, R³ is a linear or branched alkyl residue having 1 to 6 carbon atoms, R⁴ is a linear or branched alkyl residue having 1 to 4 carbon atoms and m is equal to 0, 1 or 2.

2. The reactive, urea-bonded alkoxysilanes according to claim 1, **characterized in that** the group G can be represented by the following formulae (2) to (5): 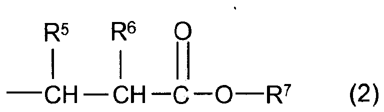 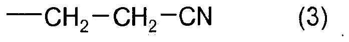 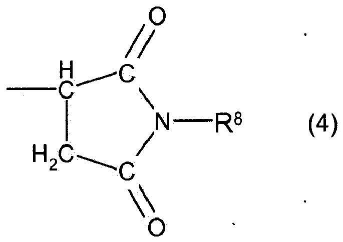 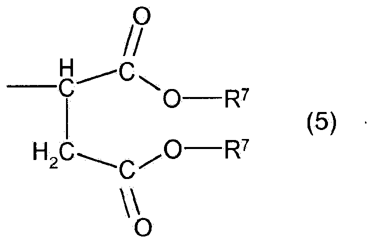 in which R⁵ and R⁶ independently of each other are a hydrogen atom or a methyl group, R⁷ is a linear or branched alkyl residue having 1 to 6 carbon atoms and R⁸ is a linear or branched alkyl residue having 1 to 8 carbon atoms.

3. The reactive, urea-bonded alkoxysilanes according to at least one of claims 1 or 2, **characterized in that** the polyether blocks A have a polydispersity PD (M_{w}/Mₙ) of less than 2.5.

4. The reactive, urea-bonded alkoxysilanes according to at least one of the preceding claims, **characterized in that** the polyether block copolymer of the structure B-Aₙ has a molecular weight Mn of between 4000 and 100,000 g/mol (daltons).

5. The reactive, urea-bonded alkoxysilanes according to at least one of the preceding claims, **characterized in that** n is equal to 2.

6. A method for producing a urea-bonded alkoxysilane, encompassing the reaction of at least one OH-terminated polyether compound of the structure B-Aₙ, in which n is equal to 2 to 10 and the central block B consists of polyoxytetramethylene, polyoxyethylene, polybutadiene, polyisoprene, polyacrylate, polymethacrylate, polyamide, polyurethane or polyester units and the blocks A consist of polyoxypropylene units, with a stoichiometric excess of a diisocyanate to form an NCO-terminated prepolymer, followed by the reaction of this prepolymer having reactive isocyanate groups with a silane compound of the formula (1): 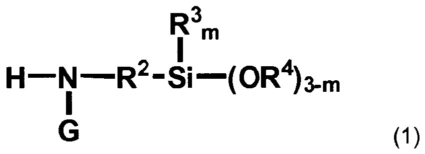 in which G is an organic group or hydrogen, R² is a divalent alkylene group having 1 to 10 carbon atoms or a -(CH₂)ₒ-NR¹-(CH₂)ₚ group, in which o and p are identical or different and equal to 2 to 6 and R¹ is an organic group having a maximum of 10 carbon atoms, R³ is a linear or branched alkyl residue having 1 to 6 carbon atoms, R⁴ is a linear or branched alkyl residue having 1 to 4 carbon atoms and m is equal to 0, 1 or 2.

7. The method according to claim 6, **characterized in that** the OH-terminated polyether compound of the structure B-Aₙ has an OH value according to DIN 53783 of between 3 and 56 mg KOH/g.

8. The method according to claim 6 or 7, **characterized in that** after reacting the OH-terminated polyether compound with the diisocyanate the unreacted monomeric diisocyanate is removed from the reaction mixture.

9. The method according to at least one of claims 6 to 8, **characterized in that** the diisocyanate is selected from the group consisting of 2,4-toluene diisocyanate, 2,6-toluene diisocyanate, 4,4'-diphenylmethane diisocyanate, 2,4'-diphenylmethane diisocyanate, 1-isocyanato-3,3,5-trimethyl-5-isocyanatomethyl cyclohexane (isophorone diisocyanate, IPDI), 4,4'-dicyclohexylmethane diisocyanate isomers, tetramethylxylylene diisocyanate (TMXDI), and mixtures thereof.

10. Use of a preparation containing one or more urea-bonded alkoxysilanes according to at least one of claims 1 to 5 or produced by a method according to at least one of claims 6 to 9 as an adhesive, sealant or coating agent.

## Revendications

1. Alcoxysilanes réactifs, liés par urée, pouvant être obtenus par transformation d'un copolymère à blocs de polyéther terminé par OH de structure B-Aₙ, dans laquelle n vaut 2 à 10 et dans laquelle le bloc central B est constitué d'unités polyoxytétraméthylène, polyoxyéthylène, polybutadiène, polyisoprène, polyacrylate, polyméthacrylate, polyamide, polyuréthane ou polyester et les blocs A sont constitués d'unités polyoxypropylène, avec un excès stoechiométrique de diisocyanate en un prépolymère Q terminé par NCO ; et transformation consécutive du prépolymère Q avec un composé silane de formule (1), 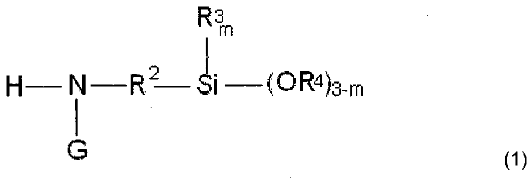 G étant un groupe organique ou hydrogène, R² représentant un groupe alkylène divalent comprenant 1 à 10 atomes de carbone ou un groupe -(CH₂)ₒ-NR¹-(CH₂)ₚ-, o et p étant identiques ou différents et valant 2 à 6 et R¹ représentant un groupe organique comprenant au maximum 10 atomes de carbone, R³ représentant un radical alkyle linéaire ou ramifié comprenant 1 à 6 atomes de carbone, R⁴ représentant un radical alkyle linéaire ou ramifié comprenant 1 à 4 atomes de carbone et m valant 0, 1 ou 2.

2. Alcoxysilanes réactifs, liés par urée selon la revendication 1, **caractérisés en ce que** le groupe G peut être représenté par les formules suivantes (2) à (5) : 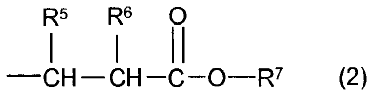 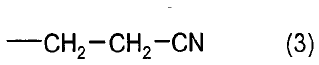 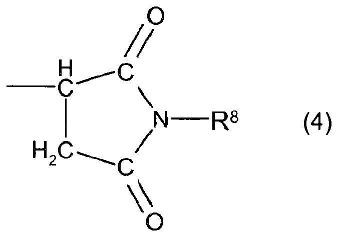 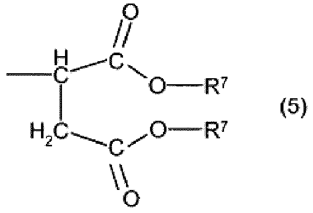 R⁵ et R⁶ représentant, indépendamment l'un de l'autre, un atome d'hydrogène ou un groupe méthyle, R⁷ représentant un radical alkyle linéaire ou ramifié comprenant 1 à 6 atomes de carbone et R⁸ représentant un radical alkyle linéaire ou ramifié comprenant 1 à 8 atomes de carbone.

3. Alcoxysilanes réactifs, liés par urée selon au moins l'une quelconque des revendications 1 ou 2, **caractérisés en ce que** les blocs polyéther A présentent une polydispersité PD (M_{w}/Mₙ) inférieure à 2,5.

4. Alcoxysilanes réactifs, liés par urée selon au moins l'une quelconque des revendications précédentes, **caractérisés en ce que** le copolymère à blocs de polyéther de structure B-Aₙ présente un poids moléculaire Mₙ entre 4000 et 100 000 g/mole (daltons).

5. Alcoxysilanes réactifs, liés par urée selon au moins l'une quelconque des revendications précédentes, **caractérisés en ce que** n vaut 2.

6. Procédé pour la préparation d'un alcoxysilane lié par urée comprenant la transformation d'au moins un composé polyéther terminé par OH de structure B-Aₙ, dans laquelle n vaut 2 à 10 et le bloc central B est constitué d'unités polyoxytétraméthylène, polyoxyéthylène, polybutadiène, polyisoprène, polyacrylate, polyméthacrylate, polyamide, polyuréthane ou polyester et les blocs A sont constitués d'unités polyoxypropylène, avec un excès stoechiométrique d'un diisocyanate en un prépolymère terminé par NCO, suivi de la transformation de ce prépolymère présentant des groupes isocyanate réactifs avec un composé silane de formule (1) : 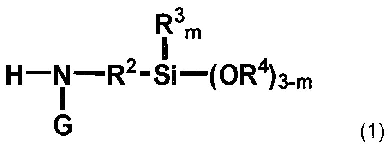 dans laquelle G est un groupe organique ou hydrogène, R² représente un groupe alkylène divalent comprenant 1 à 10 atomes de carbone ou un groupe -(CH₂)ₒ-NR¹-(CH₂)ₚ-, o et p étant identiques ou différents et valant 2 à 6 et R¹ représente un groupe organique comprenant au maximum 10 atomes de carbone, R³ représente un radical alkyle linéaire ou ramifié comprenant 1 à 6 atomes de carbone, R⁴ représente un radical alkyle linéaire ou ramifié comprenant 1 à 4 atomes de carbone et m vaut 0, 1 ou 2.

7. Procédé selon la revendication 6, **caractérisé en ce que** le composé polyéther terminé par OH de structure B-Aₙ présente un indice OH selon la norme DIN 53783 entre 3 et 56 mg de KOH/g.

8. Procédé selon la revendication 6 ou 7, **caractérisé en ce qu'**après la transformation du composé polyéther terminé par OH avec le diisocyanate, le diisocyanate monomère non transformé est éliminé du mélange réactionnel.

9. Procédé selon au moins l'une des revendications 6 à 8, **caractérisé en ce que** le diisocyanate est choisi dans le groupe constitué par le 2,4-toluènediisocyanate, le 2,6-toluènediisocyanate, le 4,4'-diphénylméthanediisocyanate, le 2,4'-diphénylméthanediisocyanate, le 1-isocyanato-3,3,5-triméthyl-5-isocyanatométhylcyclohexane (isophoronediisocyanate, IPDI), les isomères du 4,4'-dicyclohexylméthanediisocyanate, le tétraméthylxylylènediisocyanate (TMXDI) et leurs mélanges.

10. Utilisation d'une composition contenant un ou plusieurs alcoxysilane(s) lié(s) par urée selon au moins l'une quelconque des revendications 1 à 5 ou préparé(s) selon au moins l'une quelconque des revendications 6 à 9 comme adhésif, matériau d'étanchéité ou matériau de revêtement.
